# EUROPEAN PATENT APPLICATION

(11) **EP 1 598 697 A1**
(43) Date of publication of application: **23.11.2005**
(21) Application number: 04711747.8
(22) Date of filing: 17.02.2004
(51) Int. Cl.: G03B 27/46

(54) **PRINT PRODUCTION METHOD, PRINT PRODUCTION SYSTEM, PRINT ORDER SLIP, PRINT CONTAINING BAG, AND PRINT PRODUCT**

(30) Priority: 25.02.2003 JP 2003047387
(71) Applicant: Konica Minolta Photo Imaging, Inc., Shinjuku-ku, Tokyo 163-0512 (JP)
(72) Inventor: HASEGAWA, Masataka, Hachioji-shi, Tokyo 192-8505 (JP); TAMURA, Tomoaki, Hino-shi, Tokyo 191-8511 (JP); MIYAZAWA, Kazuhiro, Hino-shi, Tokyo 191-8511 (JP); IGARASHI, Takashi, Hino-shi, Tokyo 191-8511 (JP)
(74) Representative: Gille Hrabal Struck Neidlein Prop Roos
(86) International application number: PCT/JP2004/001738
(87) International publication number: WO 2004/077144

(57) **Abstract**

By executing an ordering program which causes a computer to work as process sequence storage unit 15c, display item setting unit 15d, order-screen creating unit 15f, order history information storing unit 15i, and display mode changing unit 15j, an ordering screen displays only items that were selected in previous steps and items that are set according to the result of previous selections and selectable in the current step. Further, the screen shows preset options or options recommended in reference to order history information. Therefore, the operator can place orders just by selecting options on the screen even the operator is unaccustomed to the terminal.

## Description

### TECHNICAL FIELD

This invention relates to print-production method and print-production system which produce photo prints according to order information, photo-print order form, photo envelope, and print products.

### BACKGROUND

A conventional print-production system which produces prints of photos, postcards, and seals to orders has returned print products and negative films together in a specific envelope (or bag) to a customer who placed the order. (For example, see Patent Document 1.)

This envelope contains a photo-print order form to be filled in a customer (or a person who places a print order here) or shop clerk. This form contains ordering items such as customer name, phone number, order date, frame numbers to be printed out, print sizes, number of prints, and so on. When re-ordering, the customer writes a new order in this form and hands to a clerk in the print shop. To this order, the shop clerk produces prints using a print-producing apparatus.

Patent Document 1:Japanese Patent Publication Open to Public Inspection No. H10-20408

However, the conventional print-production method has required shop clerks to check the content (or print products) of photo envelopes to the order information written on the envelopes. This checking work is very time consuming and complicated. For print shops that handle lots of print orders, this is one of problems to be solved.

Recently, various packing devices have been developed to automatically sort and pack print products. When using this kind of packing device in the print-production system, the shop clerk must unpack the envelop, take out print products from the envelop, check them according to the order information, and put the checked print products again into the envelope. In other words, the print products must be packed twice. This reduces the working efficiency.

### SUMMARY

An object of this invention is to solve the above problem, that is, to facilitate checking of print products to order information and increase the efficiency in print production works.
(1) This invention provides a print-production method for producing photo prints by a print-producing apparatus according to order information written on a photo-print order form, wherein the print-production method contains
   a first recording process of recording the order information in an information recording field of the photo-print order form whose electronic information can be read and written without touching it,
   a print-producing process of producing photo prints by a print-producing apparatus according to the order information,
   a second recording process of writing print-production information in the information recording field (in which electronic information can be written and read without touching the field) provided on each print product,
   a reading process of reading order information from the information recording field of the photo-print order form and the information recording field of each print product,
   a discriminating process of comparing the order information by the print-production information and checking whether they match each other, and
   an alarming process of outputting an alert message telling "The print product does not satisfy the order" when the discriminating means finds the print-production information does not match the order information.
(2) This invention provides a print-production system comprising an ordering terminal which receives print orders from order information written on photo-print order forms and a print-producing apparatus which produces photo prints, wherein each order form and each print product contains an information recording field in which electronic information is written and read without touching the field,
   the print-producing apparatus is composed of a first recording device of printing print-production information in the information recording field of the print product, and
   the ordering terminal or print-producing apparatus further composes
   a second recording device of recording order information in the information recording field of the photo-print order form,
   a reading device of reading order information from the information recording field of the photo-print order form and print-production information from the information recording field of each print product which is produced by the print-producing apparatus,
   a discriminating device of comparing the order information by the print-production information and checking whether they match each other, and
   an alarming device of outputting an alert message telling "The print product does not satisfy the order" when the discriminating device finds the print-production information does not match the order information.
   In accordance with structures (1) and (2) of this invention, the print-production information read from the information recording field of each print product is compared by the order information read from the information recording field of each photo-print order form and an alert message is output when the print-production information does not match the order information. This can go without operator's checking works and increase the print production efficiency.
(3) The print-production method of structure (1) of this invention further contains a third recording process of writing the print-production information which was read from the information recording field of the print product in the reading process in the information recording field of the photo-print order form when the discriminating process founds that the print-production information matches the order information.
(4) The second recording device in the print-production method of structure (2) of this invention writes the print-production information which was read from the information recording field of the print product by the reading device in the information recording field of the photo-print order form when the discriminating means founds that the print-production information matches the order information.
   In accordance with structures (3) and (4) of this invention, the print-production information is written in the information recording field of the photo-print order form when the print-production information matches the order information. Histories of orders and print-productions can easily be managed.
(5) The print-producing apparatus in the print-production method of structure (3) of this invention uses the print-production information, or order and print-production information which is recorded in the information recording field of the print product to produce re-ordered prints.
(6) The print-producing system in the print-production method of structure (4) of this invention uses the print-production information, or order and print-production information which is recorded in the information recording field of the print product to produce re-ordered prints.
   In accordance with structures (5) and (6) of this invention, re-ordered prints can be produced in the same ordering and printing conditions as the previous conditions since reordering is processed using the print-production information and/or order information which is recorded in the information recording field of the print product.
(7) In the print-production method of any one of structures (1), (3), and (5) of this invention, the second recording process writes the print-production information in the information recording field of every print product belonging to a single print order.
(8) In the print-production system of any one of structures (2), (4), and (6) of this invention, the first recording device writes the print-production information in the information recording field of every print product belonging to a single print order.
   In accordance with structures (7) and (8) of this invention, the print-production information is written in the information recording field of every print product belonging to a single print order. The relationship between the order and the print products can easily be checked.
(9) In the print-production method of any one of structures (1), (3), and (5) of this invention, the second recording process writes the print-production information in the information recording field of each of some print products belonging to a single print order.
(10) In the print-production system of any one of structures (2), (4), and (6) of this invention, the first recording device writes the print-production information in the information recording field of each of some print products belonging to a single print order.
   In accordance with structures (9) and (10) of this invention, the print-production information is written in the information recording field of each of some print products belonging to a single print order. This can write only information required to check the relationship between order information and print-production information and increase the print-production efficiency.
(11) In the print-production method of any one of structures (1), (3), (5), (7), and (9) of this invention, the photo-print order form is attached to a photo envelope which can store print products. The reading process reads order information from the information recording field of the photo-print order form and print-production information of the information recording field of each print product before the print products were put into the envelope.
(12) In the print-production system of any one of structures (2), (4), (6), (8), and (10) of this invention, the photo-print order form is attached to a photo envelope which can store print products. The reading device reads order information from the information recording field of the photo-print order form and print-production information of the information recording field of each print product before the print products were put into the envelope.
   In accordance with structures (11) and (12) of this invention, order information and print-production information are read before the print products are put into the envelope. Therefore, it is possible to check the relationship between the order information and the print-production information before print products are put into the envelope.
(13) In the print-production method of any one of structures (1), (3), (5), (7), and (9) of this invention, the photo-print order form is attached to a photo envelope which can store print products. The reading process reads order information from the information recording field of the photo-print order form and print-production information of the information recording field of each print product after the print products were put into the envelope.
(14) In the print-production system of any one of structures (2), (4), (6), (8), and (10) of this invention, the photo-print order form is attached to a photo envelope which can store print products. The reading device reads order information from the information recording field of the photo-print order form and print-production information of the information recording field of each print product after the print products were put into the envelope.
   In accordance with structures (13) and (14) of this invention, order information and print-production information are read after the print products are put into the envelope. Therefore, it is possible to check the relationship between the order information and the print-production information after print products are put into the envelope.
(15) The photo-print order form of this invention on which print order information is written contains an information recording field in which electronic information is written or read without touching the field. Print order information is written in this field.
   In accordance with structure (15) of this invention, order information can be written as electronic information, on the photo-print order form.
(16) A photo envelope of this invention contains a photo-print order form to record print order information in the information recording field in which electronic information can be read and written without touching the field.
   In accordance with structure (16) of this invention, a photo envelope can provide a photo-print order form on which order information can be recorded as electronic information.
(17) In this invention, an information recording field is provided in which electronic information can be read and written without touching the field. Print-production information on production of photo prints is recorded in this information recording field.

In accordance with structure (17) of this invention, print-production information can be recorded, as electronic information, on print products.

### BRIEF DESCRIPTION OF THE DRAWINGS

FIG. 1 shows a configuration of print-production system 1 which is a preferred embodiment of this invention.
FIG. 2 shows photo-print order form F which is printed on the surface of photo envelope B.
FIG. 3 shows a functional configuration of RFID tag 10 in FIG. 2.
FIG. 4 shows an example of data record which is written in RFID tag 10.
FIG. 5 shows a functional configuration of reader/writer 50.
FIG. 6 shows the internal configuration of print-producing apparatus 100 which is viewed from the front side.

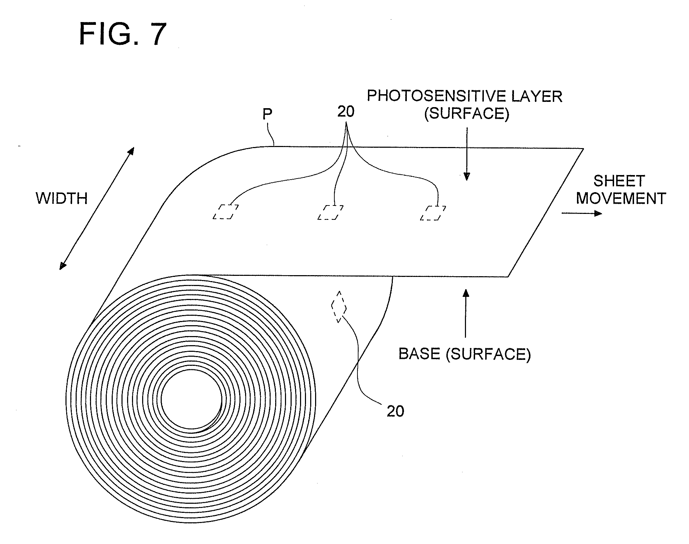

FIG. 7 shows how RFID tags 20 are embedded in print paper P.
FIG. 8(a) shows a schematic top view of exposing device 200. FIG. 8(b) shows a schematic front view of exposing device 200.
FIG. 9 shows an example of provision of readers 241a on the surface of transfer roller 241. FIG. 9(a) shows an example of provision of a plurality of loop antennae (r) connected in series on transfer roller 241. FIG. 9(a) shows an example of provision of a single loop antenna (r) on the entire surface of transfer roller 241.
FIG. 10 shows an example of print product S.
FIG. 11 shows an example of print-production information to be recorded in RFID tag 20 which is embedded in print product S.
FIG. 12 shows an explanatory flow chart of print production in print-production system 1.
FIG. 13(a) shows photo envelope B and print products S before print products S are put into the envelope. FIG. 13(b) shows photo envelope B which contains print products S.

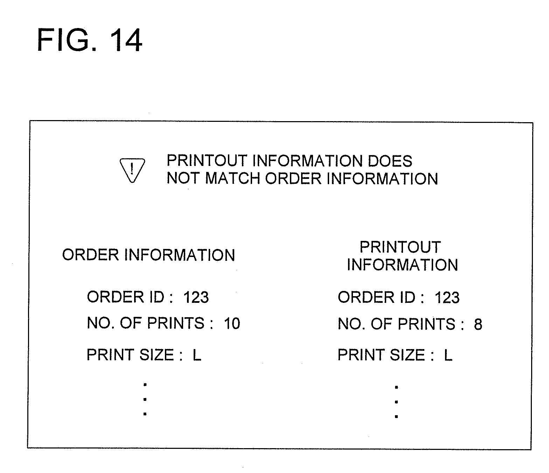

FIG. 14 shows an example of an alert message displayed on the display means of ordering terminal 40.
FIG. 15 shows an example of configuration of print-production system 2 comprising exposing device 200, developing device 300, and cutting device 800 which are separately provided.
FIG. 16 shows the internal configuration of exposing device 200 in the system of FIG. 15 which is viewed from the front side.

### DESCRIPTION OF THE PREFERRED EMBODIMENT

Below will be explained the preferred embodiments of this invention with reference to accompanying drawings.

The preferred embodiment uses an example of a print-production system. This system uses an automatic wireless identification technology called RFID (Radio Frequency Identification). In this system, a wireless IC (Integrated Circuit) tag whose electronic information can be read and write without touching to each of photo-print order forms and print products. The RFID tag attached to the photo-print order form records order information and the RFID tag attached to the print product records print-production information. When print products are put into a photo envelope which contains a photo-print order form, the print-production information recorded in the RFID tag of the print product is compared by order information recorded in the RFID tag of the photo-print order form to check whether they match with each other.

First will be explained the configuration of the system.

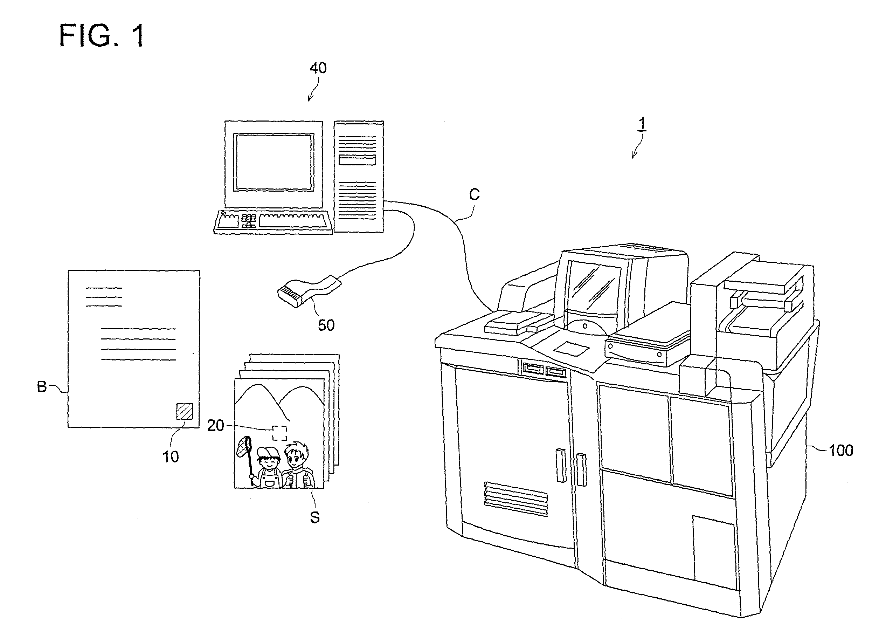

FIG. 1 shows a configuration of print-production system 1 which is a preferred embodiment of this invention.

As shown in FIG. 1, print-production system 1 is composed of ordering terminal 40 which accepts and manages print orders by photo envelopes B on which photo-print order form F is printed and print-producing apparatus 100 which produces print products S to the print orders. Ordering terminal 40 is connected to print-producing apparatus 100 with cable C to transfer information to and from each other.

Next will be explained photo envelope B.

Photo envelope B is so designed to hold print products (such as photos, postcards, and recording medium) S that are produced by print-producing apparatus 100. Photo envelope B has a photo-print order form F printed on the surface to record order information.

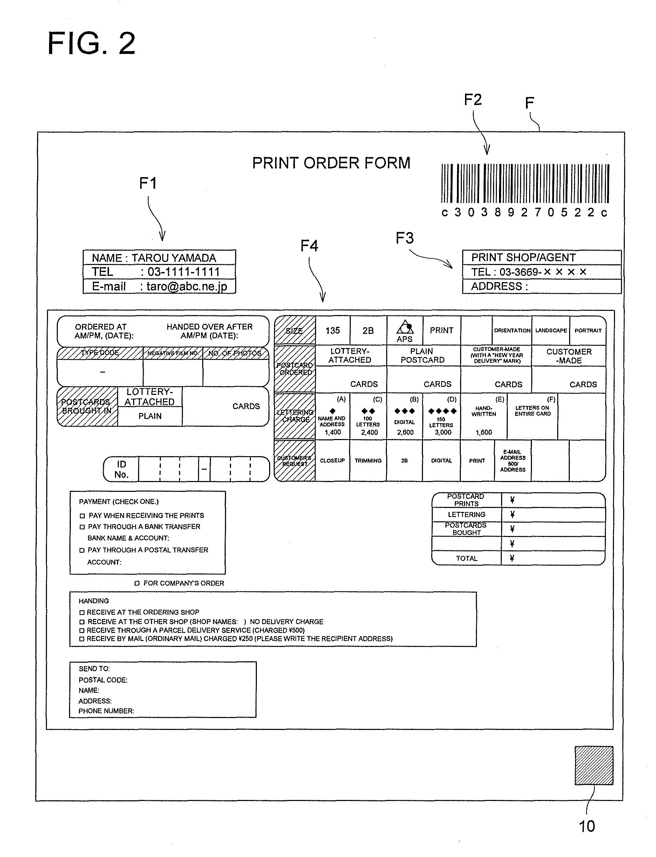

FIG. 2 shows photo-print order form F which is printed on the surface of photo envelope B.

As seen from FIG. 2, photo-print order form F has entry field F1 to record the name, phone number, and e-mail address of a person who places a print order in the upper left part of the form. An order ID and its barcode F2 are printer in the upper right part of the order form to identify a print order. Below the barcode field is printed a print shop information field F3 to record the name, phone number, and address of a print shop.

In the central part of the order form is provided a field F4 to enter print order information such as date of ordering, scheduled print-finish date, number of prints, print size, print orientation, print type (such as Photo, Postcard, Print, and Recording medium like CD-R), print charge, process method (such as Close-up and Trimming), payment type (such as payment at the shop and payment through a bank transfer), print-product handing method (such as Receive at the ordering shop and Receive through a parcel delivery service), and information on dispatching the print products.

Photo-print order form F has RFID IC tag 10 bonded or embedded in the lower right corner of the form. IC tag 10 records order information as electronic information and a reader/writer is used to read data from and write data in the IC tag.

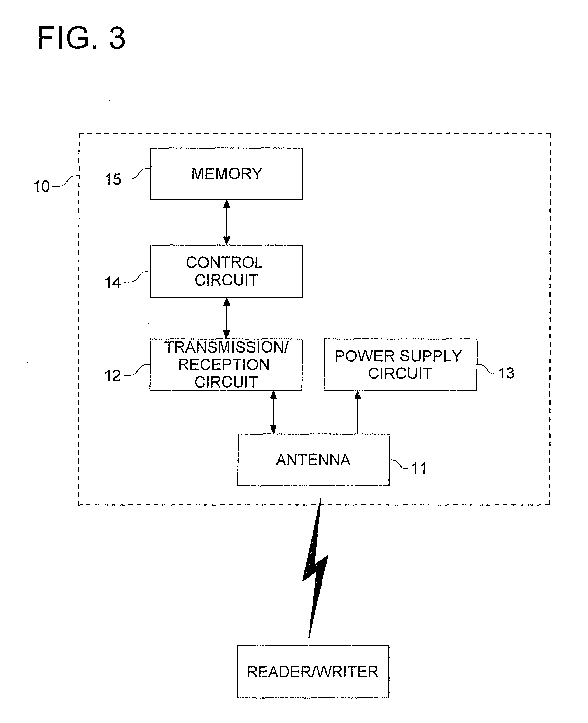

FIG. 3 shows a functional configuration of IC tag 10 (short for RFID IC tag).

As shown in FIG. 3, IC tag 10 has antenna 11, transmission/reception circuit 12, power supply circuit 13, control circuit 14, and memory 15. This embodiment uses an electromagnetic induction system to communicate with IC tag 10. However, any communication system can be used such as electromagnetic coupling system, microwave communication system, and optical communication system.

Antenna 11 is a loop antenna which receives a electric wave signal from a reader/writer and sends the signal to transmission/reception circuit 12. Further, antenna 11 receives a signal from transmission/reception circuit 12 and transmits it to the reader/writer.

Transmission/reception circuit 12 receives a signal from antenna 11, demodulates it, and sends the result to control circuit 14. Further, transmission/reception circuit 12 receives a signal from control circuit 14, modulates and amplifies the signal, and sends the result to antenna 11.

Power supply circuit 13 receives an electric wave from print-producing apparatus 100 via antenna 11, converts it into a voltage, and supplies power to respective components in the IC tag 10.

Control circuit 14 receives a signal from transmission/reception circuit 12 and writes (or records) information in memory 15. Further, control circuit 14 reads information from memory 15 and sends a signal to transmission/reception circuit 12 to modulate and multiply the read information (signal).

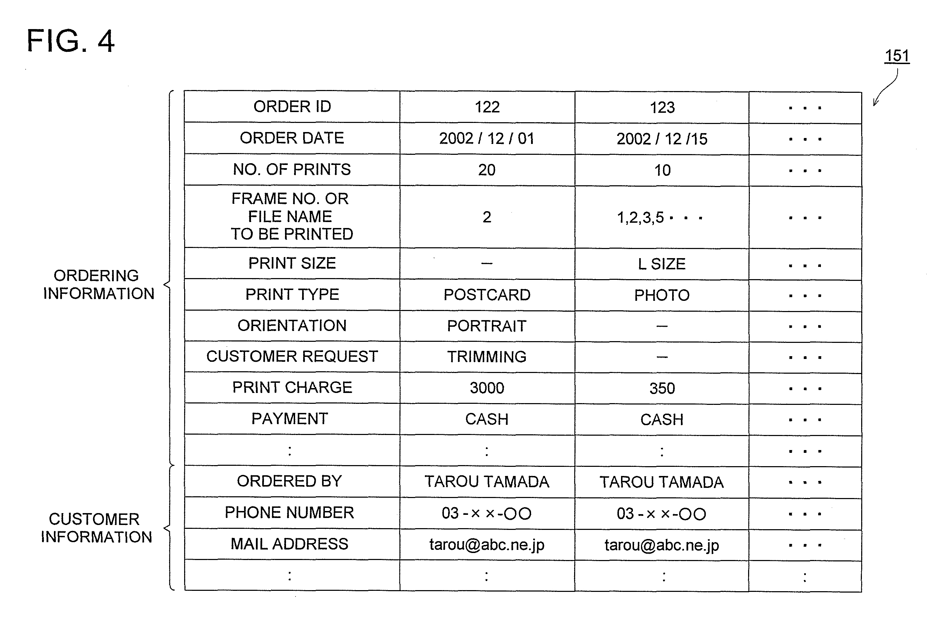

As FIG. 4 shows an example of recording data in memory, memory 15 stores various kinds of print order information (such as order ID, date of ordering, number of prints ordered, frame number or file name to be printed, print size, print type, print orientation, process condition, print charge, and payment type) and customer information (such as name, phone number, and mail address of a person who placed the order).

Next will be explained ordering terminal 40.

Ordering terminal 40 has a display device, an input unit, and reader/writer 50 which reads information from and writes information in IC tag 10. Ordering terminal 40 can be an information processing unit such as a personal computer and a PDA (Personal Digital Assistant).

When receiving a print order, the operator enters order information in the ordering terminal 40, records the order information in IC tag 10 embedded in photo-print order form F via reader/writer 50 and sends the order information to print-producing apparatus 100. When the ordered prints are produced, the operator enters order information which is read from IC tag 10 on photo-print order form F (via reader/writer 50) and print-production information which is read from IC tag 10 of print products S into ordering terminal 40. Ordering terminal 40 compares print-production information by order information and discriminates whether they match with each other. When these kinds of information match with each other, the ordering terminal 40 writes the print-production information in IC tag 10 of the photo-print order form F by means of the reader/writer 50. If they do not match, the ordering terminal 40 outputs an alert message to a display device.

Below will be explained reader/writer 50.

Reader/writer 50 works as a reading device and a second recording device. Reader/writer 50 writes information in IC tag 10 of photo-print order form F and IC tag 20 of print product S and reads information from IC tags 10 and 10.

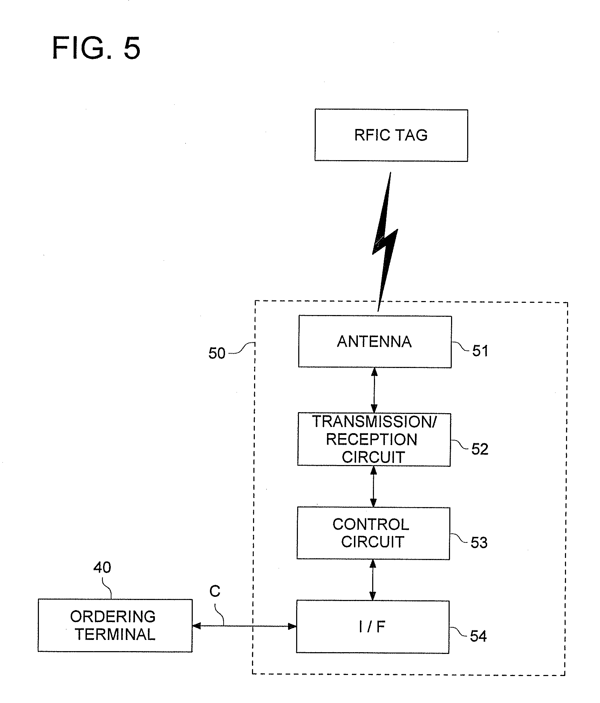

FIG. 5 shows a functional configuration of reader/writer 50.

As shown in FIG. 5, reader/writer 50 has antenna 51, transmission/reception circuit 52, control circuit 53, and interface (I/F) 54.

Antenna 51 receives an electric wave signal from an IC tag and outputs the signal to transmission/reception circuit 162. Further, antenna 51 receives a signal transmission/reception circuit 52 and transmits the signal to IC tag 10.

Transmission/reception circuit 52 receives a signal from antenna 51, demodulates it, and outputs the resulting signal to control circuit 53. Further, transmission/reception circuit 52 received a signal from control circuit 53, modulates and multiplies it, and outputs the resulting signal to antenna 51.

Control circuit 53 receives a signal from transmission/reception circuit 52 and outputs this signal to interface circuit (I/F) 54 together with a signal to instruct the interface circuit to transmit the signal to the ordering terminal 40. Interface circuit (I/F) transfers information to and from the ordering terminal 40. The control circuit 53 receives a signal (to be written in IC tag 10) from the ordering terminal 40 via I/F 54 and outputs the signal to transmission/reception circuit 52 together with a signal to modulate and multiply the signal.

Next will be explained print-producing apparatus 100.

Print-producing apparatus 100 receives order information from the ordering terminal 40, produces prints according to image information instructed by the operator according to the order information, and output print products S. A print-production example below assumes that sensitive materials are exposed and developed to produce print products S. However, it is apparent that print production can contain non-photo productions such as negative film printing, postcard printing, and recording image information on recording media.

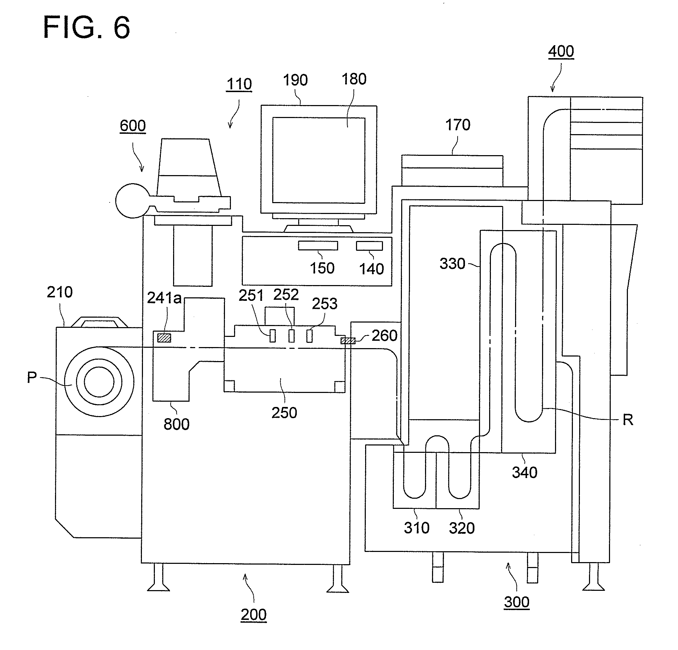

FIG. 6 shows the internal configuration of print-producing apparatus 100 which is viewed from the front side.

As shown in FIG. 6, print-producing apparatus 100 has host computer 110 which collectively controls components of the print-producing apparatus 100, exposing device 200 which exposes photographic paper P to light according to exposure image information output from the host computer 100, developing device 300 which develops the exposed paper P, sorter 400 which sorts the developed print products, and film scanner 600. The dotted transfer route R in FIG. 6 indicates a route on which photographic paper is delivered.

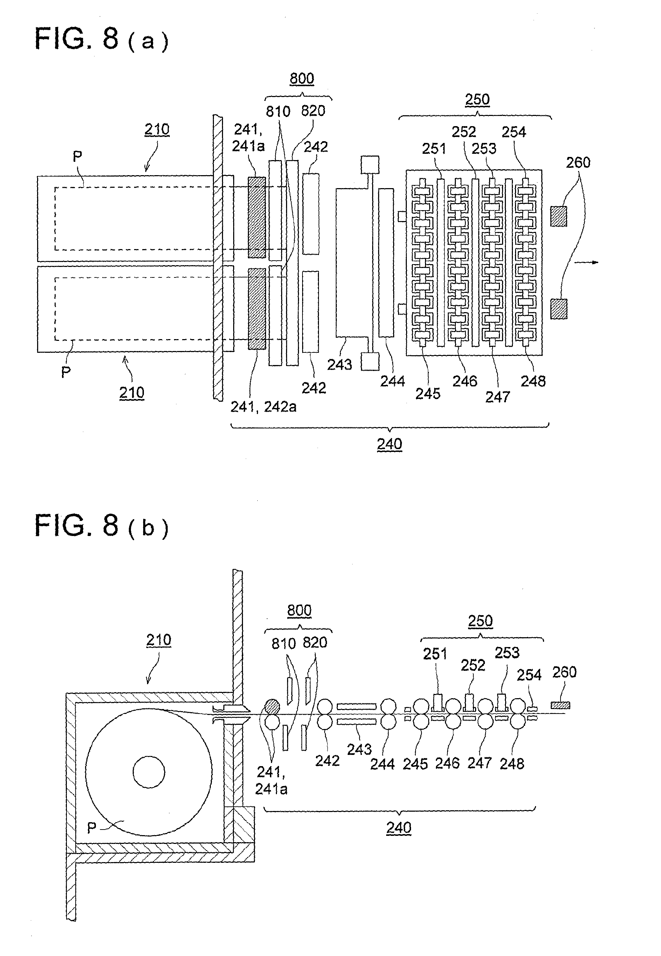

Photographic paper P for print-production will be explained below with reference to FIG. 8.

FIG. 8 shows an external view of paper P. As shown in FIG. 8, paper P is a roll of paper sheet which includes a base layer and a photosensitive layer made of a photosensitive material such as silver halide.

Paper P provides IC tags 20 at a preset interval in the center of line perpendicular to the movement of the paper. IC tags can be attached to the paper in any manner unless it spoils the picture quality. For example, they can be bonded to the base layer or embedded between the photosensitive layer and the base layer of paper.

IC tag 20 is an information recording field which records print-production information as electronic information and the same as IC tag 10 in function and structure. (For details. see the above description and drawing of IC tag 10.)

IC tag 20 has antenna, transmission/reception circuit, power supply circuit, control circuit, and memory and can be read and written by a reader/writer.

Here, IC tag 20 records information on paper P when paper P is produced. The paper information contains a lot number, paper dimensions (such as width, length, and thickness), paper finishing (such as glossy finish and matt finish), paper developing type (such as type of chemical), and paper property which are determined when the paper is produced.

Next will be explained how each component works in print-producing apparatus 100.

First will be explained host computer 110.

As shown in FIG. 6, host computer 110 is composed of keyboard 120, media reader 140, CD (Compact Disk) drive unit 150, flat-bed scanner 170, touch-sensitive panel 180, and all-in-one monitor 190.

Host computer 110 receives order information from ordering terminal 40, processes image information this is read from printed photos by flat-bed scanner 170, from films by film scanner 600 or from media reader 140 or a record medium mounted on CD drive unit 150 according to the order information, creates image information for exposure, and sends it to exposing device 200.

Next will be explained exposing device 200.

FIG. 8(a) shows a schematic top view of exposing device 200. FIG. 8(b) shows a schematic front view of exposing device 200.

As shown in these drawings, exposing device 200 has paper transfer section 240 which delivers paper P from paper magazine 210 to exposure field 250, cutting device 800 which cuts paper P coming from magazine 210 at a timing instructed by host computer 110, and exposing section 250 which exposes the paper pieces (P) into which the paper was cut by the cutting device 800.

Paper transfer section 240 has transfer roller pairs 241 which deliver paper P coming from magazine 210, transfer roller pairs 242 and 244 which delivers paper pieces which were cut by cutting device 800, transfer guide 243, and transfer roller pairs 245 to 248 which deliver paper pieces through exposing section 250.

Transfer roller pairs 241, 242, and 244 are cylindrical roller and transfer roller pairs 244 to 248 are grooved rollers.

Transfer roller pair 241 contains reader 241a which detects each IC tag 20 embedded in paper P. This detection is performed to prevent IC tags 20 on paper P from being cut by the cutting device 800 and control cutting timing so that each paper piece may always contain at least one IC tag 20.

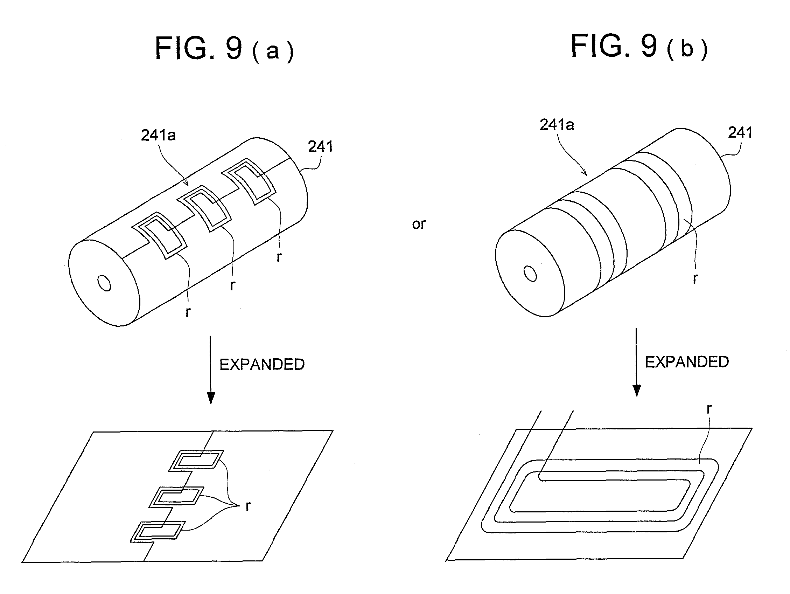

As shown in FIG. 9(a), reader 241a has loop antenna r and a transmission/reception circuit (not shown in the drawing). Two or more loop antennae r are connected in series along the width of transfer roller pair 241. Further, as shown in FIG. 9(b), it is possible to provide a single loop antenna r on the entire surface of transfer roller pair 241.

Reader 241a receives paper information from IC tag 20 via loop antenna r and sends the paper information to host computer 110 together with information (signal) indicating the detection of IC tag 20. From detection information sent from IC tag 20 via reader 241a and a printout condition specified by the order information, host computer 110 determines a paper cutting position or a timing at which the cutting device 800 cuts paper P and sends the timing information to the cutting device 800.

The cutting device 800 has two cutters 810, 820 which independently cut two paper sheet supplied from two magazines 210 at individual specified timings. The cutting device 800 cuts paper P at a specified timing sent from host computer 110. The cut paper pieces P are delivered to exposing section 250.

The exposing section 250 is equipped with blue-light emitting head 251, green-light emitting head 252, and red-light emitting head 253. These heads are provided so that their main scanning directions may be perpendicular to the movement of paper P. Each of the blue and green-light emitting heads 251, 252 is a VFPH (Vacuum Fluorescent Print Head) having two lines of light-emitting dots which are disposed perpendicularly to the movement of paper transfer section 240. The red-light emitting head 253 is an LED array (Light Emitting Diode array) having one line of light-emitting dots which is disposed perpendicularly to the movement of paper transfer section 240.

Blue, green and red lights from the light emitting heads 251, 252, 253 are respectively focused to the cut paper piece P through the self-focusing lens (Selfocus lens) for exposure. After the paper piece P is exposed, writer 260 writes print-production information in IC tag of the paper piece P. Then the paper piece is sent to the developing device 300.

Writer 260 is a first recording device. The writer 260 is provided for each paper sheet P sent out from respective magazines. The writer 260 is functionally the same as the reader/writer 50 and its drawing and details are omitted here. In short, the writer 260 has an antenna and a transmission/reception circuit, receives print-production information from host computer 110 via the antenna and transmits the print-production information to IC tag 20 to record it. The print-production information includes, printout conditions and image processing conditions. The printout conditions contains, for example, order ID, frame number or file name, print size, print type, print orientation, and process condition of each printed image. The image processing condition contains, for example, color correction value, contrast adjustment, sharpness adjustment, and white balance adjustment.

Below will be explained developing device 300.

As shown in FIG. 6, the developing device 300 has color-developing tank 310 which receives paper P from the exposing device 200 and color-develops it, bleaching and fixing processing tank 320 which bleaches and fixes the color-developed paper, stabilizing section 330 which stabilizes the fixed paper, and drying section 340 which dries the stabilized paper. The dries paper P is sent as print product S to sorter 400.

Sorter 400 is equipped with two or more trays, receives print products S from the developing device 300, sorts them to the trays according to instructions from the host computer 110.

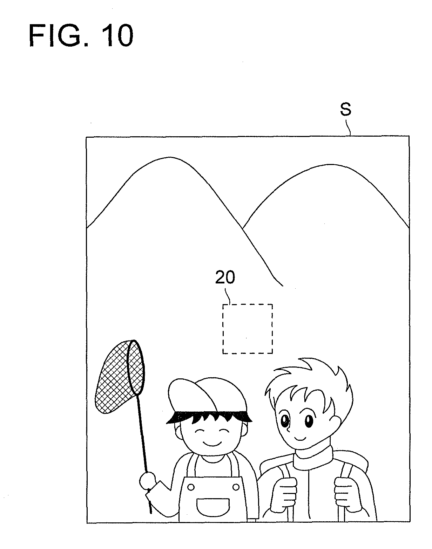

FIG. 10 shows an example of print product S.

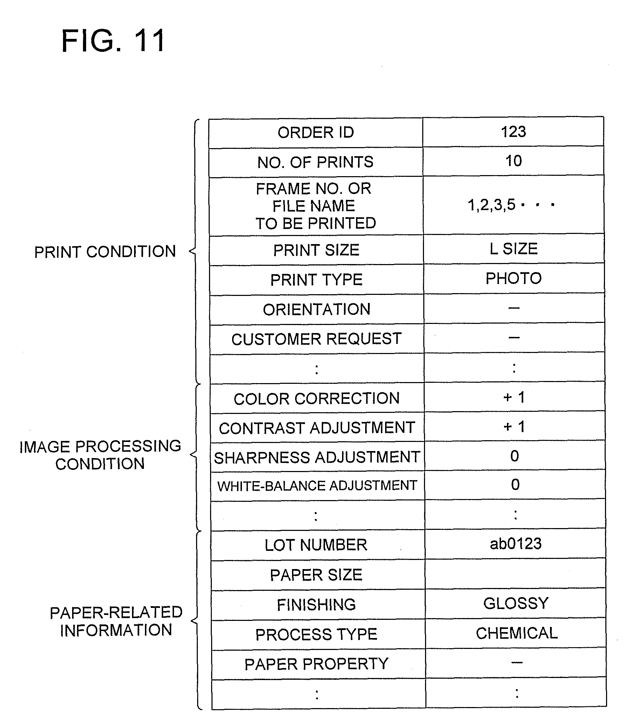

As shown in FIG. 10, print product S has an image printed on the surface and contains IC tag 20. As shown in FIG. 11, this IC tag 20 stores paper information and print-production information such as printout condition and image processing condition.

Next will be explained the operation of this preferred embodiment.

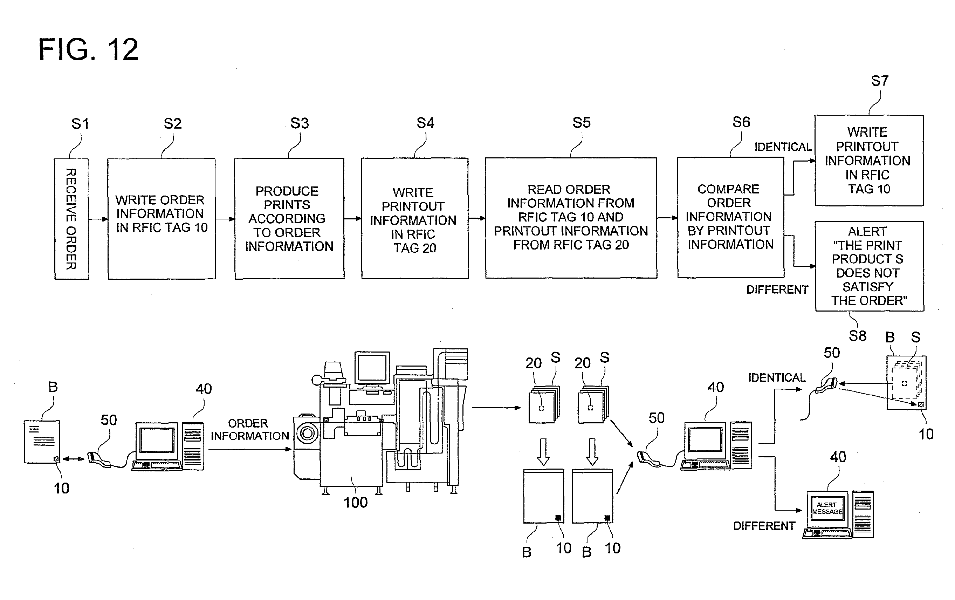

FIG. 12 shows an explanatory flow chart of print production in print-production system 1. This print-production system involves steps of producing print products S according to the order information written in photo-print order form F, comparing print-production information read from IC tag 20 of print products S by order information read from IC tag 10 of photo-print order form F, and checking whether the print products S are what photo envelope B requested.

In step 1 of FIG. 12, a person who wants to place a print order fills in the photo-print order form F printed on photo envelope B and brings the photo envelope to the print shop to order. The clerk in the print shop enters the content (order information) of the photo-print order form F into the ordering terminal 40.

In step S2, the order information entered in the ordering terminal 40 is written in IC tag 10 of the photo-print order form F by the reader/writer 50. Further, the order information is output from the ordering terminal 40 to the print-producing apparatus 100.

In step S3, the print-producing apparatus 100 produces prints according to the order information by reading information of images to be printed from films or recording media which contain the image information by a reading device such as film scanner 600 and media reader 140, and sends the information to the host computer 110. The host computer 110 processes images to be printed according to the information, creates image information for exposure, and outputs the information to the exposing device 200. Next, the magazine 210 starts to feed paper sheets P. Reader 241a detects IC tag 20 embedded in the running paper and sends the detection information and paper information to the host computer 110. The host computer 110 determines cutting timing of the cutting device 800 according to printout condition of the detection information and order information and sends the timing information to the cutting device 800.

The cutting device 800 receives the timing information from the host computer 110, cuts the running paper P and sends the cut paper pieces (of the specified sizes) to the exposing device 200. The exposing device 200 receives the cut paper pieces P, exposes them according to the image information, and sends the exposed paper pieces to the developing device 300 by the conveying mechanism 240.

In step S4, the writer 260 writes print-production information (about the paper piece P) in IC tag 20 which is embedded in each exposed paper piece while the paper piece is transferred to the developing device 300. It is possible to write the print-production information in all IC tags 20 of the whole paper belonging to a single order or in IC tags 20 of only the first and last ones of the paper pieces belonging to a single order.

After receiving the print-production information, each paper piece P is delivered to the developing device 300 and developed there. The developed paper pieces are sent to the sorter 400, sorted into ejection trays by orders.

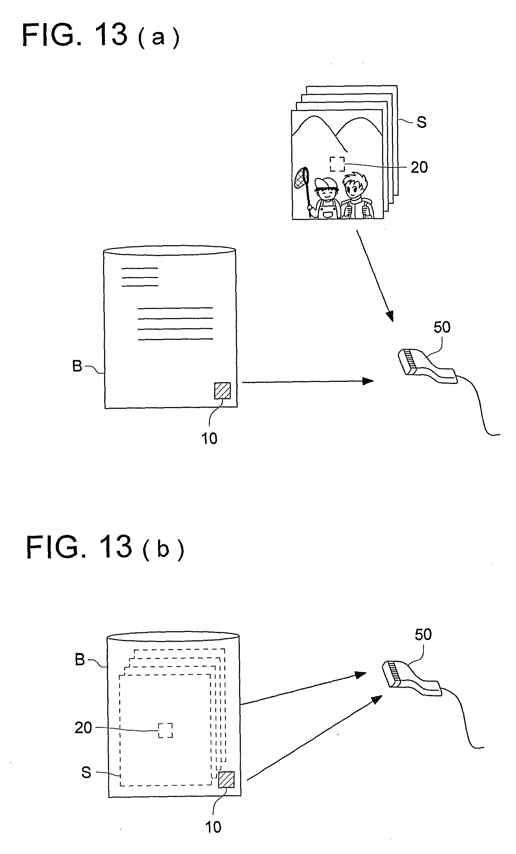

Before putting the sorted print products S from each ejection tray into photo envelope B, the operator causes the reader/writer 50 to read order information from IC tag 10 on the photo-print order form F and print-production information from IC tags 20 of the print products S into the ordering terminal 40. It is possible to read IC tags 20 of the print products S respectively by the reader/writer 50 before putting the print products S into the photo envelope B as shown in FIG. 13(a) or to read them collectively after putting the print products S into the photo envelope B as shown in FIG. 13(b). When reading IC tags 20 of the print products S into the photo envelope B, the reader/writer 50 reads first from IC tag closest to the reader/writer and then sequentially to the further IC tags.

In step S5, the reader/writer 50 reads order information from the IC tag 10 on the photo-print order form F sends the information to the ordering terminal 40. Similarly the reader/writer 50 reads print-production information from IC tags 20 of the print products S to be put into the photo envelope B and sends the information to the ordering terminal 40.

In step S6, the ordering terminal 40 compares the order information and the print-production information which are entered from the reader/writer 50 to check whether they match with each other. They are checked, for example, in terms of order ID, number of prints, frame number or image file name of printed images, print type, and print size.

When the order information and the print-production information match with each other in compare ("Matched" in step S6), the ordering terminal 40 judges that the print products S are put into a right photo envelope B and that the print products S are just what are required by the order information. In step S7, the print-production information read from the print products S (by the reader/writer 50) is written in the IC tag 10 on the photo-print order form F. At the same time, the ordering terminal 40 outputs a message indicating "the order has been processed correctly" on the display.

In response to the message on the display of the ordering terminal 40, the operator puts the print products S into the photo envelope B and returns the photo envelope B together with the print products S to the customer (who placed the order).

Meanwhile, if the print-production information is found to be different from the order information ("Not matched" in step S6), the ordering terminal 40 outputs an alert message telling "The print product does not satisfy the order" to the display assuming that the photo envelope B is not for the print products S or that the print products S does not satisfy the order information. In this case, it is possible to output a list of the order information items and a list of print-production information items to facilitate the operator to see where the difference lies at a glance or to directly output a message indicating a mismatching such as "The number of printouts is wrong" or other necessary information only.

Seeing the alert message on the display of the ordering terminal 40, the operator can search a photo envelope B which is right for the print products S or process the order once more.

In this way, this invention uses IC tag 10 on the photo-print order form F to record order information and IC tag 20 to record print-production information on the print products S. The contents of information from those IC tags 10 and 20 are checked for identity when the print products S are put into a right photo envelope B having the photo-print order form F. Therefore, the operator need not implement this identity checking. This can increase the photo production efficiency. Further, right photo envelopes B can be selected for print products S.

Further, the IC tags are re-writable. Therefore, the print order forms F or photo envelopes B having the photo-print order forms F can be used repeatedly.

Furthermore, the IC tag can store a lot of data in memory. The IC tag 10 of the photo-print order form F can store a history of orders and a history of print productions. Therefore, operators can easily check the order and print-production histories.

For re-ordering, it is possible to use the print-production information which was recorded in IC tag 20 of print products P to produce prints under the same printout condition and to use the order information and print-production information which were recoded in IC tag 10 of the print order form F under the same order and printout conditions.

Since the IC tags can be read and written without being touched, the order information and print-production information can be easily read even after the print products S were put into the photo envelope B. Further, even when a packing device is provided in print-production system 1 to automatically put print products S into photo envelope B, the relationship between order information and print-production information can be checked after the print products are put into the envelope.

The first preferred embodiment is one of preferred examples of print-production system 1 to which this invention is applied. However, it is to be understood that this invention is not intended to be limited to the specific embodiment.

For example, in the above description, the ordering terminal 40 is equipped with a reader/writer 50. However, it is possible to provide the reader/writer 50 in the print-producing apparatus 100 and check the relationship between order information and print-production information by the host computer 110 of the print-producing apparatus 100. In this case, when the order information matches the print-production information, the reader/writer 50 writes the print-production information in IC tag 10 on the photo-print order form F. If the order information does not match the print-production information, an alert message is output to the display.

Further, the print-production system can have a packing device connected to the print-producing apparatus 100 to automatically put print products S into photo envelopes B. In this case, order information and production information are compared and discriminated after print products S are put into the photo envelopes B.

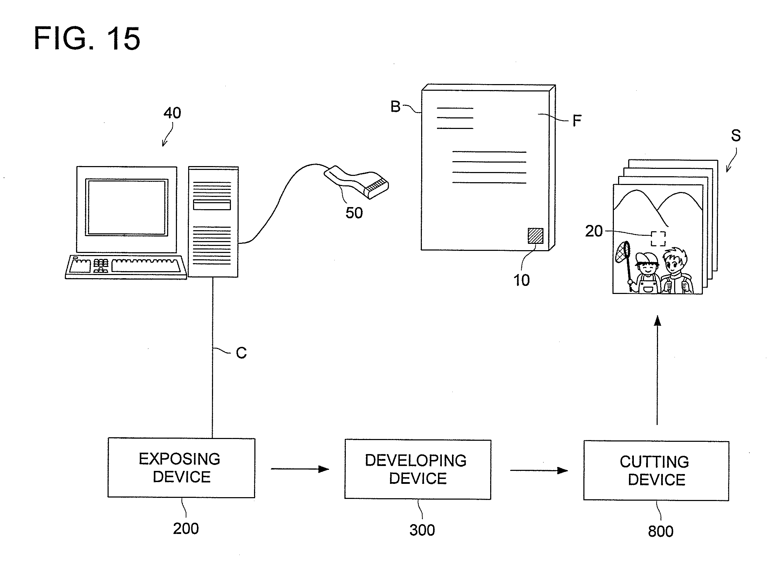

In the above description, the exposing device 200 and the developing device 300 are assembled in a body and the print-producing apparatus 100 cuts paper P into pieces of specified sizes by the cutting device 800 before exposure. However, this invention is not limited to this. As shown in FIG.15, for example, the print-production system 2 can be composed of exposing device 200, developing device 300, and cutting device 800 which are separated from each other.

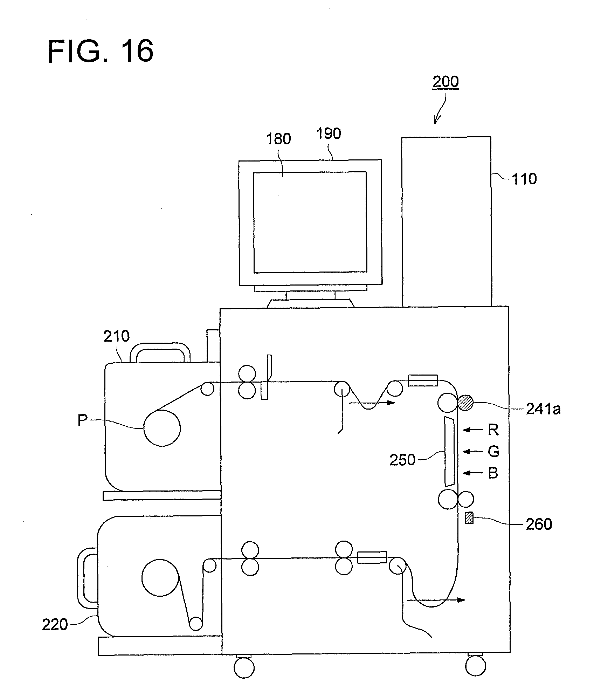

FIG. 16 shows the internal configuration of exposing device 200 in the print-production system 2 whose components are separate from each other.

As shown in FIG. 16, the separate exposing device 200 is equipped with host computer 110 and monitor 190. This exposing device 200 does not cut the paper sheet P coming from the paper roll magazine before exposure. The exposed paper sheet is taken up into a roll by a take-up magazine 220 and mounted on the magazine in the developing device 300. Also in the developing device 300, the developed paper sheet is taken up into a roll and mounted on the magazine in the cutting device 800. The cutting device 800 cuts the paper sheet into paper pieces of specified sizes according to the image information.

In the exposing device 200, reader 241a is provided before exposing section 250 to locate IC tags 20 on the paper sheet. The exposing device 200 controls exposure so that each image may contain at least one IC tag 20.

The cutting device 800 locates each image on the paper sheet according to the print-production information read from IC tags 20 on the paper sheet by the reader 241a and determines the cutting positions of the paper P.

In print-production system 2, the exposed and developed paper sheet P is cut into paper pieces by the cutting device 800 and ejected as print products S. Similarly to the print-production system 1, ordering terminal 40 compares the print-production information of the print products S by the order information and discriminates whether they match.

Although the present invention has been fully described in connection with the preferred embodiments thereof, it is to be noted that various changes and modifications are made in configuration and operation of the print-production system 1 without departing from the spirit and scope of the invention.

### [Industrial applicability]

Since this invention reads order information from the information recording field of a photo-print order form and print-production information from the information recording field of print products, checks whether they match with each other, and makes an alert when they do not match. Therefore, the operator need not check whether the print products satisfy the order. This can increase the print production efficiency.

When the print-production information matches the order information, this invention writes the print-production information in the information recording field of the photo-print order form. In other words, histories of orders and print-productions can be recorded in the information recording field of the photo-print order form. This facilitates checking of the history.

For re-ordering, this invention produces prints repeatedly according to the print-production information and/or order information which are recorded in the information recording fields. Therefore, re-printing can be made under the same order and printout conditions as the previous ones.

Further, in accordance with this invention, the print-production information is recorded in the information recording fields of all print products belonging to a single order. This can make checking of print products by orders more correctly.

Furthermore, the print-production information is recorded in the information recording field of each of some print products belonging to a single print order. This can write only information required to check the relationship between order information and print-production information and increase the print-production efficiency.

Order information and print-production information are read before print products are put into photo envelopes. Therefore, it is possible to check the relationship between the order information and the print-production information before print products are put into the envelope.

Order information and print-production information are read after print products are put into envelopes. Therefore, it is possible to check the relationship between the order information and the print-production information after print products are put into the envelope.

Order information can be recorded as electronic information in photo-print order forms.

A photo envelope can contain a photo-print order forming which order information can be recorded as electronic information.

Further, print-production information can be recorded as electronic information in print products.

## Claims

1. A print-production method for producing photo prints by a print-producing machine according to order information written on a print order form, comprising steps of:
producing photo prints by print-producing apparatus based on the order information;
first recording step of recording the order information in an information recording field of the print order form whose electronic information can be read and written without touching the field;
setting an information recording field in a print products produced by the print-producing apparatus, wherein the information recording field whose the electronic information can be read without touching the field;
second recording step of recording a print-production information in the information recording field of each print product;
reading the order information from the information recording field of the print order form and the print-production information from the information recording field of each print product;
comparing the order information with the print-production information read according to the reading step;
distinguishing whether the order information and the print-production information correspond.

2. The print-production method of claim 1, further comprising step of:
outputting the alarm of the order and print product does not match when the distinguishing step founds that the print-production information does not matches the order information.

3. The print-production method of claim 1, further comprising step of:
third recording step of recording the print-production information in the information recording field of the print order form when the distinguishing step founds that the print-production information matches the order information.

4. The print-production method of claim 3, further comprising step of:
producing photo prints by print-producing apparatus based on the print-production information or order and print-production information which is recorded in the information recording field of the print product to produce re-ordered prints.

5. The print-production method of claim 1, wherein the second recording step recording the print-production information in the information recording field of every print product according to the print order.

6. The print-production method of claim 1, wherein the second recording process writes the print-production information in the information recording field of portion of some print products according to the print order.

7. The print-production method of claim 1, wherein the print order form is attached to a envelope which can store print products, and wherein the reading step for reading the order information from the information recording field of the print order form and the print-production information from the information recording field of the print product before the print products were put into the envelope.

8. The print-production method of claim 1, wherein the print order form is attached to a envelope which can store print products, and wherein the reading step for reading the order information from the information recording field of the print order form and the print-production information from the information recording field of the print product after the print products were put into the envelope.

9. A print-production system comprising:
an ordering terminal which receives print orders from order information written on print order forms;
a print-producing apparatus which produces photo prints connect to the ordering terminal;
the ordering terminal or the print-producing apparatus further including;
a first recording device for recording print order information in the information recording field of the print order form, wherein the information recording field whose the electronic information can be read and written without touching the field;
the print-producing apparatus further comprising:
a second recording device for recording print-product information in the information recording field of the print product, wherein the information recording field whose the electronic information can be read without touching the field; and
a reading device for reading order information from the information recording field of the print order form and the print-production information from the information recording field of each print product which is produced by the print-producing apparatus; and
a discriminating device of comparing the order information by the print-production information and checking whether they match each other.

10. The print-production system of claim 9, further comprising:
an alarming device for outputting the alarm of the order and print product does not match when the discriminating device founds that the print-production information does not matches the order information.

11. The print-production system of claim 9, further comprising:
a third recording device for recording the print-production information in the information recording field of the print order form when the discriminating device founds that the print-production information matches the order information.

12. The print-production system of claim 11, wherein the print-producing apparatus for producing photo prints based on the print-production information or order and print-production information which is recorded in the information recording field of the print product to produce re-ordered prints.

13. The print-production system of claim 9, wherein the second recording device writes the print-production information in the information recording field of every print product according to the print order.

14. The print-production system of claim 9, wherein the second recording device writes the print-production information in the information recording field of portion of some print products according to the print order.

15. The print-production system of claim 9, wherein the print order form is attached to a envelope which can store print products, and wherein the reading device for reading the order information from the information recording field of the print order form and the print-production information from the information recording field of the print product before the print products were put into the envelope.

16. The print-production system of claim 9, wherein the print order form is attached to a envelope which can store print products, and wherein the reading device for reading the order information from the information recording field of the print order form and the print-production information from the information recording field of the print product after the print products were put into the envelope.

17. An print order form comprising:
an print order information recorded in an information recording field, wherein the information recording field whose electronic information can be read and written without touching the field.

18. A photo envelope which can store print products comprising:
a print order form including an print order information recorded in an information recording field, wherein the information recording field whose electronic information can be read and written without touching the field.

19. A print product form comprising:
an print-production information recorded in an information recording field, wherein the information recording field whose electronic information can be read and written without touching the field.
